# FASCICULE DE BREVET EUROPEEN

(11) **EP 1 584 190 B1**
(45) Date de publication et mention de la délivrance du brevet: **12.07.2006**
(21) Numéro de dépôt: 03796151.3
(22) Date de dépôt: 03.12.2003
(51) Int. Cl.: H04N 7/167, H04N 7/16, H04N 7/24, G06F 1/00, G06F 9/445

(54) **PROCEDE ET SYSTEME POUR GARANTIR L'INTEGRITE D'AU MOINS UN LOGICIEL TRANSMIS A UN MODULE DE CHIFFREMENT/DECHIFFREMENT ET SUPPORTS D'ENREGISTREMENT POUR METTRE EN OEUVRE LE PROCEDE**
VERFAHREN UND SYSTEM ZUR GEWÄHRLEISTUNG DER INTEGRITÄT EINER SOFTWARE, DIE ZU EINEM DATEN-VER-/ENT-SCHLÜSSELUNGSMODUL GESENDET WIRD; UND SPEICHERMEDIUM UM DAS VERFAHREN ZU VERWIRKLICHEN
METHOD AND SYSTEM FOR GUARANTEEING THE INTEGRITY OF AT LEAST ONE SOFTWARE PROGRAM WHICH IS TRANSMITTED TO AN ENCRYPTION/DECRYPTION MODULE AND RECORDING MEDIA FOR IMPLEMENTING SAME

(30) Priorité: 17.01.2003 FR 0300525
(43) Date de publication de la demande: 12.10.2005
(73) Titulaire: Logiways France, 19100 Brive la Gaillarde (FR)
(72) Inventeur: BENARDEAU, Christian, F-77600 BUSSY-SAINT-GEORGES (FR)
(74) Mandataire: Domenego, Bertrand
(86) Numéro de dépôt international: PCT/FR2003/003578
(87) Numéro de publication internationale: WO 2004/073307

(56) Documents cités:
- WO-A-01/61437
- WO-A-98/43425
- HUSEMANN D: "Standards in the smart card world" COMPUTER NETWORKS, ELSEVIER SCIENCE PUBLISHERS B.V., AMSTERDAM, NL, vol. 36, no. 4, 16 juillet 2001 (2001-07-16), pages 473-487, XP004304910 ISSN: 1389-1286

## Description

L'invention concerne un procédé et un système pour garantir l'intégrité d'au moins un logiciel informatique exécutable par au moins un module de chiffrement/déchiffrement ledit au moins un logiciel étant transmis par un émetteur vers un décodeur équipé dudit au moins un module de chiffrement/déchiffrement par l'intermédiaire d'un réseau de transmission d'informations grande distance.

Plus précisément, l'invention concerne un procédé dans lequel l'émetteur réalise :
a) une étape de chiffrement de signaux d'informations transmis vers le décodeur,
b) une étape de transmission vers ledit au moins un module de chiffrement/déchiffrement du décodeur, d'un message contenant l'information nécessaire pour que le décodeur déchiffre les signaux d'informations transmis à l'étape a), et
c) une étape de transmission dudit au moins un logiciel informatique vers ledit au moins un module de chiffrement/déchiffrement du décodeur,
   et dans lequel le décodeur réalise :
d) une étape de déchiffrement des signaux d'informations transmis par l'émetteur lors de l'étape a) à l'aide de l'information prévue à cet effet dans le message transmis lors de l'étape b).

De tels procédés sont, par exemple, nécessaires dans les systèmes payants de diffusion de chaînes de télévision. En effet, dans ces systèmes, de manière à mettre à jour les décodeurs, l'émetteur diffuse fréquemment des correctifs logiciels destinés à être exécutés par chacun des décodeurs de manière à mettre à jour leur fonctionnalité. Un correctif logiciel est un petit programme exécutable par un calculateur électronique et destiné à modifier certains paramètres ou parties d'un programme plus grand exécutable par ce même calculateur. Ces correctifs logiciels sont également connus sous le terme anglais de "Patch".

De manière conventionnelle, chaque décodeur est équipé d'un module de chiffrement/déchiffrement apte à chiffrer et/ou déchiffrer les signaux transmis par l'émetteur de manière à déchiffrer les chaînes de télévision transmises. Ce module est classiquement appelé module de sécurité puisque c'est lui qui a pour fonction de sécuriser les échanges d'informations entre l'émetteur et le décodeur. Ce module de chiffrement/déchiffrement est également apte à exécuter les correctifs logiciels qu'il reçoit.

Le module de chiffrement/déchiffrement se présente sous la forme d'un module autonome. Par exemple, aujourd'hui, ce module de chiffrement/déchiffrement est intégré dans une carte à puce qui doit être insérée dans le décodeur pour que celui-ci fonctionne correctement.

Aujourd'hui, il existe de nombreux décodeurs construits frauduleusement pour recevoir les chaînes de télévision payantes sans payer. Ces décodeurs sont appelés décodeurs pirates. La partie chiffrement/déchiffrement des signaux reçus étant la plus complexe, ces décodeurs pirates intègrent le plus souvent un module de chiffrement/déchiffrement authentique associé à un dispositif frauduleux de commande de ce module. Le dispositif de commande frauduleux transmet au module de chiffrement/déchiffrement authentique les informations nécessaires pour que celui-ci déchiffre les chaînes de télévision payantes même si ces informations ont été frauduleusement acquises.

Pour lutter contre de tels décodeurs pirates, la solution a consisté pendant un temps à diffuser, par l'intermédiaire de l'émetteur, des correctifs logiciels spéciaux dits anti-pirates. Ces correctifs logiciels anti-pirates sont destinés à modifier le fonctionnement du module de chiffrement/déchiffrement authentique de manière à ce que le décodeur pirate dans son ensemble devienne inutilisable. Par exemple, un correctif logiciel anti-pirate peut, après qu'il ait été exécuté par le module de chiffrement/déchiffrement authentique, modifier l'emplacement des zones mémoires vers lesquelles les informations déchiffrées par le module de chiffrement/déchiffrement authentique sont enregistrées ou aller chercher les informations nécessaires au déchiffrement des chaînes de télévision dans un autre emplacement mémoire.

Toutefois, les décodeurs pirates les plus récents sont maintenant aptes à supprimer les correctifs logiciels ànti-pirates avant qu'ils ne soient reçus par le module de chiffrement/déchiffrement authentique. Ainsi, les correctifs logiciels anti-pirates ne sont pas exécutés par le module de chiffrement/déchiffrement authentique.

L'invention vise à remédier à cet inconvénient en proposant un procédé dans lequel la suppression d'un logiciel transmis à un décodeur est rendue plus difficile.

L'invention a donc pour objet un procédé tel que décrit ci-dessus caractérisé :
- en ce que l'émetteur insère dans le message transmis lors de l'étape b) une information supplémentaire propre à permettre audit au moins un module de chiffrement/déchiffrement de vérifier qu'il a effectivement reçu le ou chaque logiciel informatique transmis à l'étape c),
- en ce que ledit au moins un module de chiffrement/déchiffrement vérifie à partir de l'information supplémentaire insérée par l'émetteur dans le message transmis lors de l'étape b) s'il a effectivement reçu le ou chaque logiciel transmis lors de l'étape c), et
- en ce que si le ou chaque logiciel n'est pas reçu ledit au moins un module de chiffrement/déchiffrement inhibe l'étape d).

Dans le procédé ci-dessus, le module de chiffrement/déchiffrement authentique dont est équipé le décodeur reçoit le message contenant l'information nécessaire pour déchiffrer les signaux d'informations chiffrés transmis par l'émetteur. Ce message contient en plus une information lui permettant de vérifier que tous les correctifs logiciels transmis par l'émetteur lui ont été communiqués.

Dès lors, si le module de chiffrement/déchiffrement authentique détecte, à partir de l'information supplémentaire insérée dans le message transmis à l'étape b) qu'un correctif logiciel est manquant, ce module de chiffrement/déchiffrement authentique agit de manière à empêcher le déchiffrement des informations transmises lors de l'étape a).

Ce procédé rend la suppression des correctifs logiciels transmis lors de l'étape c) plus difficile.

En effet, si le décodeur pirate laisse passer le message contenant l'information supplémentaire pour vérifier la présence de tous les correctifs logiciels transmis, celle-ci est reçue par le module de chiffrement/déchiffrement authentique. Le module de chiffrement/déchiffrement est alors capable de détecter la suppression d'un correctif logiciel et inhibe en réponse le déchiffrement des signaux d'informations transmis lors de l'étape a) c'est-à-dire par exemple des chaînes de télévision.

Ainsi, si le décodeur pirate laisse passer le message contenant l'information supplémentaire, il doit également laisser passer l'ensemble des correctifs logiciels transmis lors de l'étape c).

Par ailleurs, le décodeur pirate ne peut pas simplement être modifié pour supprimer également le message contenant l'information supplémentaire transmise lors de l'étape b). En effet, ce message contient également les informations nécessaires au déchiffrement des signaux transmis lors de l'étape a). Par conséquent, si ce message est supprimé, le déchiffrement des signaux d'informations transmis lors de l'étape a) est impossible.

Par conséquent, grâce à un tel procédé, les décodeurs pirates ne peuvent plus simplement se contenter de supprimer certains messages d'informations ou correctifs logiciels reçus et doivent accéder au contenu du message transmis lors de l'étape b) ce qui s'avère nettement plus compliqué que la suppression pure et simple de certains messages reçus.

Suivant d'autres caractéristiques du procédé conforme à l'invention :
- l'émetteur chiffre le message transmis à l'étape b), et ledit au moins un module de chiffrement/déchiffrement déchiffre le message transmis lors de l'étape b) pour permettre la réalisation de l'étape d) ;
- l'émetteur réalise :
   e) une étape de construction d'un premier identificateur du ou de chaque logiciel informatique transmis lors de l'étape c), et
   f) une étape d'insertion de cet identificateur dans le message transmis lors de l'étape b),
      et ledit au moins un module de chiffrement/déchiffrement réalise :
   g) une étape de reconstruction de l'identificateur du ou de chaque logiciel informatique à partir du ou de chaque logiciel informatique reçu,
   h) une étape de comparaison de l'identificateur reconstruit à l'étape g) avec l'identificateur inséré par l'émetteur lors de l'étape f), et
   i) si l'identificateur reconstruit à l'étape g) ne correspond pas à celui inséré à l'étape f) dans le message transmis à l'étape b), une étape d'inhibition de l'étape d),
   j) si l'identificateur reconstruit à l'étape g) correspond à l'identificateur inséré à l'étape f) dans le message transmis lors de l'étape b), une étape de validation de l'intégrité du ou de chaque logiciel informatique ;
- pour garantir l'intégrité d'un ensemble de plusieurs logiciels informatiques exécutables chacun par ledit au moins un module de chiffrement/déchiffrement, l'étape e) comporte une opération de construction d'un seul identificateur pour ledit ensemble de plusieurs logiciels informatiques à transmettre lors de l'étape c) à partir d'informations concernant chacun des logiciels dudit ensemble et l'étape g) consiste à réaliser la même opération que celle réalisée lors de l'étape e) pour reconstruire un identificateur unique correspondant à celui construit lors de l'étape e) si ledit ensemble reçu par le décodeur est identique à celui émis par l'émetteur ;
- les étapes d), g), h), i) et j) sont réalisées par le même module de chiffrement/déchiffrement ;
- un premier module de chiffrement/déchiffrement autonome réalise uniquement les étapes d), h), i) et j), et en ce qu'un second module de chiffrement/déchiffrement autonome et indépendant du premier module de chiffrement/déchiffrement et solidaire du décodeur, réalise au moins l'étape g);
- l'émetteur réalise en plus :
   k) une seconde étape de construction d'un second identificateur du ou de chaque logiciel informatique transmis lors de l'étape c), ce second identificateur étant transmis conjointement avec le ou chaque logiciel correspondant lors de l'étape c), et
- l'étape g) réalisée par le second module de chiffrement/déchiffrement comporte :
   - une opération de reconstruction du second identificateur transmis conjointement avec le ou chaque logiciel,
   - uniquement si le second identificateur reconstruit correspond à celui transmis conjointement avec le ou chaque logiciel lors de l'étape c), une opération de reconstruction du premier identificateur insérée dans le message transmis lors de l'étape b) et de transmission de ce premier identificateur reconstruit vers le premier module de chiffrement/déchiffrement pour que ce premier module de chiffrement/déchiffrement puisse procéder à l'étape h) ;
- le premier et le second identificateurs sont obtenus à partir d'un même identificateur du ou de chaque logiciel informatique en chiffrant le même identificateur à l'aide respectivement d'une première et d'une seconde clés de chiffrement différentes ;
- ledit au moins un module de chiffrement/déchiffrement exécute ledit au moins un logiciel informatique à chaque fois que son intégrité est validée lors de l'étape j).

L'invention a également pour objet un support d'enregistrement d'informations comportant des instructions pour l'exécution d'un procédé conforme à l'invention, lorsque lesdites instructions sont exécutées par l'émetteur .

L'invention a également pour objet un support d'enregistrement d'informations comportant des instructions pour l'exécution d'un procédé conforme à l'invention, lorsque lesdites instructions sont à exécuter par ledit au moins un module de chiffrement/déchiffrement.

L'invention a également pour objet un système pour garantir l'intégrité d'au moins un logiciel informatique exécutable par au moins un module de chiffrement/déchiffrement, le système comportant un émetteur pour transmettre ledit au moins un logiciel informatique par l'intermédiaire d'un réseau de transmission d'informations grande distance, et un décodeur équipé dudit au moins un module de chiffrement/déchiffrement,
l'émetteur étant apte :
- à chiffrer des signaux d'informations transmis vers le ou chaque décodeur,
- à transmettre vers ledit au moins un module de chiffrement/déchiffrement du décodeur, un message contenant l'information nécessaire pour que le décodeur déchiffre lesdits signaux d'informations transmis, et
- à transmettre ledit au moins un logiciel informatique vers ledit au moins un module de chiffrement/déchiffrement du décodeur,
- à transmettre ledit au moins un logiciel informatique vers ledit au moins un module de chiffrement/déchiffrement du décodeur,
   le décodeur étant apte à déchiffrer lesdits signaux d'informations transmis par l'émetteur à l'aide de l'information prévue à cet effet contenue dans ledit message transmis par l'émetteur,
caractérisé :
- en ce que l'émetteur est apte à insérer dans ledit message une information supplémentaire propre à permettre audit au moins module de chiffrement/déchiffrement de vérifier qu'il a reçu le ou chaque logiciel informatique transmis,
- en ce que ledit au moins un module de chiffrement/déchiffrement est apte à vérifier à partir de l'information supplémentaire insérée par l'émetteur dans ledit message, s'il a effectivement reçu le ou chaque logiciel transmis par l'émetteur, et
- en ce que si le ou chaque logiciel n'est pas reçu ledit au moins un module de chiffrement/déchiffrement est apte à inhiber le déchiffrement desdits signaux d'informations transmis.

Suivant d'autres caractéristiques du système conforme à l'invention :
- le ou chaque décodeur est équipé d'un unique module de chiffrement/déchiffrement amovible ;
- le ou chaque décodeur est équipé d'au moins deux modules de chiffrement/déchiffrement autonomes et indépendants l'un de l'autre, au moins l'un de ces modules de chiffrement/déchiffrement étant solidaire du châssis du décodeur.

L'invention sera mieux comprise à la lecture de la description qui va suivre, donnée uniquement à titre d'exemple et faite en se référant aux dessins sur lesquels :
- la figure 1 est une vue schématique de l'architecture d'un premier mode de réalisation d'un système conforme à l'invention ;
- la figure 2 est un organigramme d'un procédé conforme à l'invention mis en oeuvre dans le système de la figure 1 ;
- la figure 3 est une vue schématique de la structure d'un second mode de réalisation d'un système conforme à l'invention ; et
- la figure 4 est un organigramme d'un procédé conforme à l'invention mis en oeuvre dans le système de la figure 3.

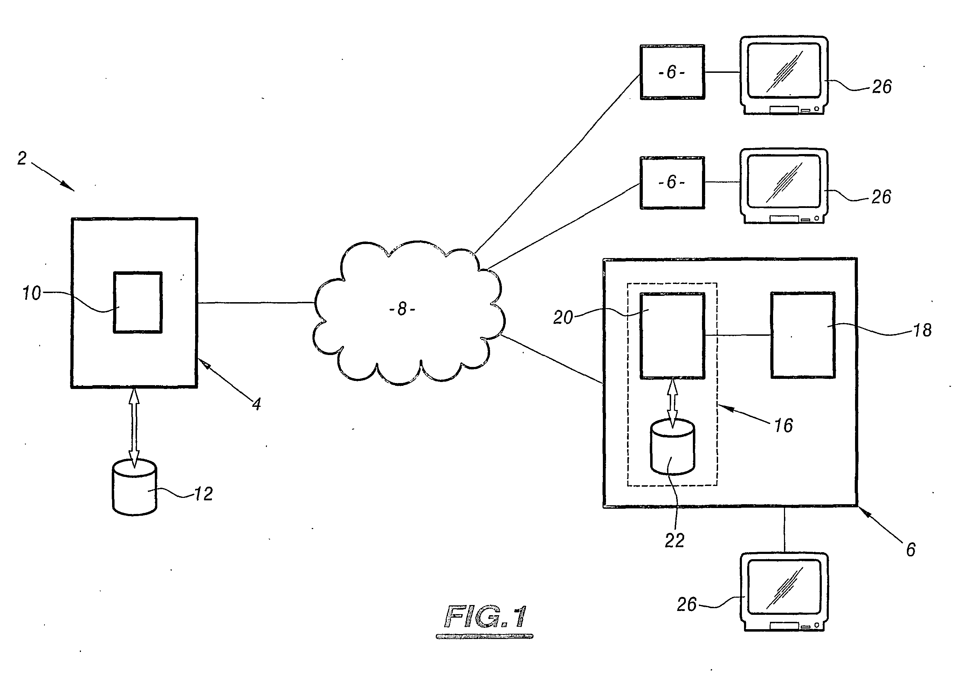

La figure 1 représente un système payant de transmission de chaînes de télévision. Ce système est désigné par la référence générale 2. Les systèmes payants de transmission de chaînes de télévision sont connus. Par conséquent, seules les caractéristiques nécessaires à la compréhension de l'invention seront décrites ici en détails.

Le système 2 comporte un émetteur 4 de chaînes de télévision chiffrées, des décodeurs 6 aptes à déchiffrer ces chaînes de télévision et un réseau 8 de transmission d'informations grande distance reliant l'émetteur 4 aux décodeurs 6. Ce réseau 8 est typiquement un réseau hertzien.

L'émetteur 4 est capable de diffuser par l'intermédiaire du réseau 8 vers tous les décodeurs 6 du système 2 des signaux d'informations chiffrés, des messages cryptés contenant des informations nécessaires pour déchiffrer les signaux d'informations ainsi que des correctifs logiciels en clair. Les signaux d'informations chiffrés correspondent ici à des chaînes de télévision embrouillées à l'aide d'un mot de contrôle, ce mot de contrôle formant l'information nécessaire pour déchiffrer ou désembrouiller ces chaînes de télévision. A cet effet, l'émetteur 4 comporte une unité 10 apte à réaliser des opérations d'embrouillage des chaînes de télévision diffusées ainsi que des opérations de cryptage du message contenant le mot de contrôle utilisé pour embrouiller les chaînes de télévision.

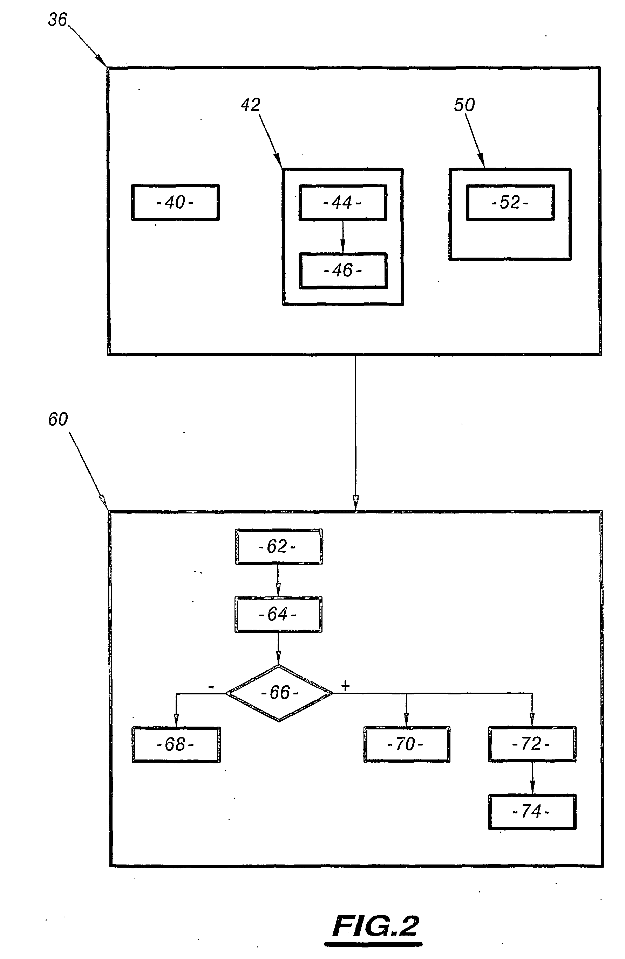

Cette unité 10 est ici réalisée à partir de calculateurs programmables conventionnels aptes à exécuter des instructions enregistrées sur un support d'enregistrement d'informations, ici une mémoire 12. La mémoire 12 comporte des instructions pour l'exécution du procédé de la figure 2 lorsque ces instructions sont exécutées par l'unité 10. De plus, cette mémoire 12 comporte les clés de chiffrement et le ou les mots de contrôle nécessaires à l'exécution du procédé de la figure 2.

Les décodeurs 6 sont tous capables de déchiffrer ou désembrouiller les signaux de télévision transmis par l'émetteur 4 à l'aide des informations contenues dans les messages transmis par ce même émetteur 4.

Ainsi, puisque tous ces décodeurs 6 remplissent des fonctions similaires, seul un de ces décodeurs 6 est représenté en détail sur la figure 1 pour simplifier l'illustration.

Le décodeur 6 comporte un module 16 de chiffrement/déchiffrement apte à décrypter le message crypté transmis par l'émetteur 4 pour en extraire le mot de contrôle et le transmettre à un module 18 de désembrouillage des chaînes de télévision embrouillées.

Le module 16 comporte un calculateur programmable conventionnel 20 et un support d'enregistrement formé ici par une mémoire 22. Le calculateur 20 est apte à exécuter des instructions enregistrées dans la mémoire 20. Ici, la mémoire 20 comporte des instructions pour l'exécution du procédé de la figure 2 lorsque lesdites instructions sont exécutées par le calculateur 20. Le module 16 est amovible. Il est par exemple réalisé à partir d'une carte à puce classique.

Le décodeur 6 est associé à un poste de télévision 26 propre à afficher les chaînes de télévision désembrouillées par le décodeur 6.

Le fonctionnement du système 2 va maintenant être décrit en regard du procédé de la figure 2.

L'émetteur 4 procède à une étape 36 de chiffrement et de transmission d'informations vers l'ensemble des décodeurs du système 2 par l'intermédiaire du réseau 8. Les informations transmises par l'émetteur 4 vers les décodeurs 6 comportent les chaînes de télévision embrouillées, des messages contenant les informations nécessaires pour qu'un décodeur puisse désembrouiller ces chaînes de télévision et de temps en temps des correctifs logiciels destinés à mettre à jour les décodeurs 6. Ainsi, lors de l'étape 36, l'émetteur 4 embrouille lors d'une sous-étape 40, la ou les chaînes de télévision diffusées à l'aide d'un mot de contrôle enregistré dans la mémoire 12. Cette sous-étape 40 est classique.

Simultanément, l'émetteur 4 transmet, lors d'une sous-étape 42, des correctifs logiciels en clair, c'est-à-dire non chiffrés, vers les décodeurs 6. Ces correctifs logiciels sont chacun classiquement associés à un identificateur CS permettant au décodeur qui les reçoit de vérifier l'intégrité de chacun des logiciels reçus. L'identificateur CS est par exemple ici un "checksum".

Lors de la sous-étape 42, l'émetteur 4 réalise également une opération 44 de construction d'un identificateur unique propre à permettre la détection, par chaque décodeur 6, de l'absence ou de la modification d'un des correctifs logiciels reçus parmi la pluralité de correctifs logiciels transmis par un émetteur 4. A cet effet, par exemple, l'émetteur 4 combine tous les checksum de chacun des correctifs logiciels en réalisant une opération ou exclusif entre chacun de ces checksum.

Ensuite, l'émetteur 4 crypte, lors d'une opération 46 l'identificateur unique construit lors de l'opération 44 à l'aide d'une clé de chiffrement K_{CS} contenu par exemple dans la mémoire 12. Le cryptage de l'identificateur unique permet de sécuriser sa transmission par l'intermédiaire du réseau 8 puisque seuls les décodeurs équipés d'une clé de chiffrement correspondante à la clé de chiffrement K_{CS} seront capables de décrypter cet identificateur unique.

Ici, c'est l'identificateur unique qui est crypté pour sécuriser la transmission des correctifs logiciels plutôt que les correctifs logiciels eux-même car cela rend le procédé plus rapide. En effet, l'identificateur unique étant plus petit en taille que l'ensemble des correctifs logiciels transmis, son cryptage est donc beaucoup plus rapide.

Lors de l'étape 36, l'émetteur 4 réalise également une sous-étape 50 de transmission d'un message de contrôle des titres d'accès cryptés à l'aide d'une clé de chiffrement K_{ECM}. Le message est également connu sous les termes de message ECM (Entitled Control Message). Le message ECM comporte classiquement le mot de contrôle nécessaire pour désembrouiller les signaux de télévision transmis lors de la sous-étape 40.

Ici, lors de la sous-étape 50, l'émetteur 4 insère, lors d'une opération 52, l'identificateur unique crypté lors de l'opération 46.

Chaque décodeur reçoit à l'étape 60 les informations transmises par l'intermédiaire du réseau 8 par l'émetteur 4. L'ensemble de ces informations reçues est transmis au module 16 de chiffrement/déchiffrement.

Le module 16 commence alors par reconstruire, lors d'une opération 62 l'identificateur unique à partir de l'ensemble des correctifs logiciels reçus. Cette opération 62 est par exemple identique à l'opération 44 de manière à ce que l'identificateur unique reconstruit par le module 16 soit identique à l'identificateur unique construit lors de l'opération 44 si tous les correctifs logiciels reçus sont identiques à ceux transmis lors de la sous-étape 42.

Ensuite, le module 16 décrypte le message ECM reçu à l'aide d'une clé de chiffrement K_{ECM} correspondant à celle utilisée par l'émetteur 4.

Une fois le message ECM décrypté, le module 16 décrypte lors d'une opération 64 l'identificateur unique contenu dans ce message ECM.

Il compare alors, lors d'une opération 66, l'identificateur unique reconstruit lors de l'opération 62 à celui décrypté lors de l'opération 64. Si les identificateurs uniques comparés ne sont pas identiques malgré plusieurs tentatives de transmission des différents correctifs logiciels par l'émetteur, alors le module 16 procède à une étape 68 d'inhibition du désembrouillage des chaînes de télévision. A cet effet, par exemple, le module 16 ne transmet pas au module 18 de désembrouillage le mot de contrôle contenu dans le message ECM reçu ou transmet un mot de contrôle erroné.

Dans le cas contraire, c'est-à-dire si les deux identificateurs comparés correspondent, alors le module 16 exécute, lors d'une opération 70, les correctifs logiciels reçus et transmet, lors d'une opération 72, le mot de contrôle contenu dans le message ECM au module de désembrouillage 18, qui désembrouille les chaînes de télévision lors d'une opération 74.

Ainsi, si le module 16 est utilisé dans un décodeur pirate et que ce décodeur pirate supprime ou modifie un correctif logiciel anti-pirate avant de le transmettre au module 16, ce dernier procède à l'opération 68 et les chaînes de télévision reçues ne sont plus désembrouillées correctement.

On remarquera également que le procédé de la figure 2 permet également d'éviter que des correctifs logiciels soient ajoutés à ceux émis par l'émetteur 4 par une personne malveillante équipée de son propre émetteur raccordée au réseau 8. En effet, de tels correctifs logiciels supplémentaires ajoutés par des personnes malveillantes ont souvent pour but soit de détruire le module 16 soit de le rendre inopérant. Ces correctifs logiciels ajoutés par des personnes malveillantes peuvent se présenter sous la forme de virus informatiques.

Dans le procédé de la figure 2, l'ajout d'un correctif logiciel est détecté de la même façon que la suppression ou la modification d'un correctif logiciel lors de l'opération 66 et ce correctif logiciel ajouté ne sera pas exécuté.

Il a été noté qu'il existe aujourd'hui des cartes à puce falsifiées aptes à se substituer au module 16 authentique dans un décodeur lui-même authentique.

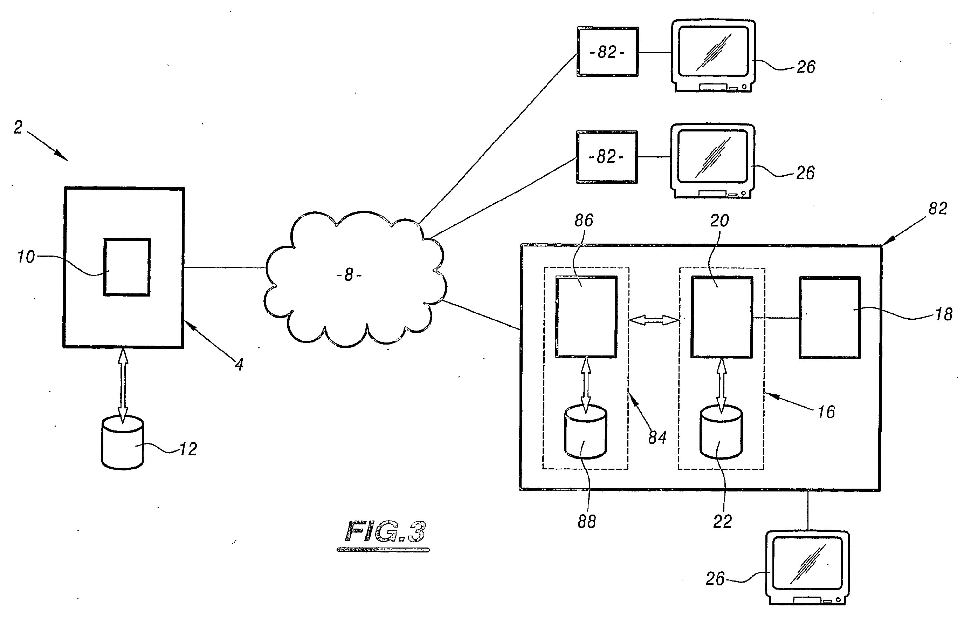

Un tel décodeur authentique équipé d'une carte à puce falsifiée ne peut pas être rendu inutilisable même en mettant en oeuvre le procédé de la figure 2, puisque la carte à puce falsifiée ne réalise pas les opérations 62 à 68. Le second mode de réalisation décrit en regard de la figure 3 est un perfectionnement du système de la figure 1 visant à remédier à cet inconvénient.

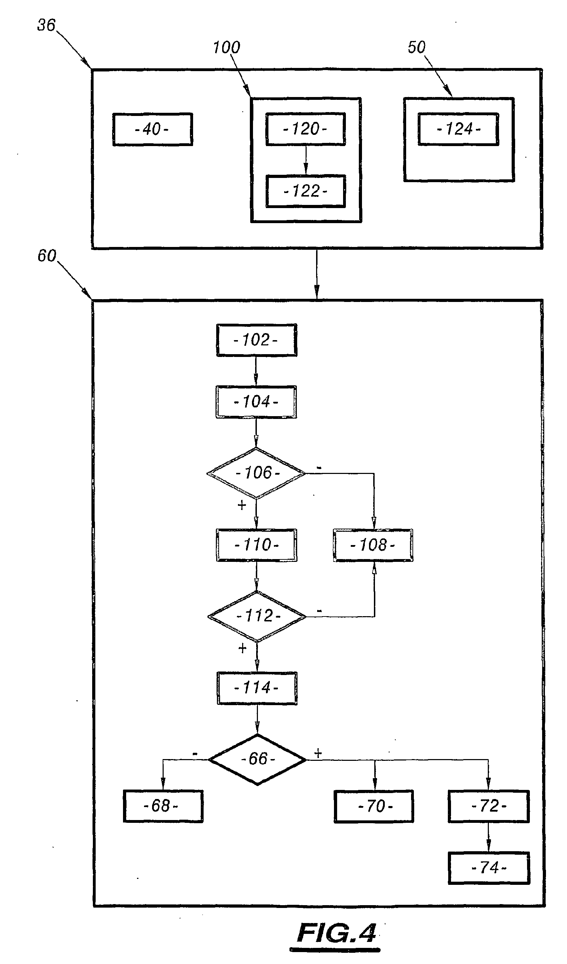

Dans ce second mode de réalisation, l'émetteur ne diffère de l'émetteur 4 de la figure 1 que par le fait que la mémoire 12 comporte des instructions pour l'exécution du procédé de la figure 4 lorsqu'elles sont exécutées par le module de chiffrement/déchiffrement de cet émetteur et les décodeurs 6 sont remplacés par des décodeurs 82.

Les décodeurs 82 sont structurellement identiques au décodeur 6 à l'exception du fait qu'il comporte un second module de chiffrement/déchiffrement 84.

Le module 84 est similaire au module 16 et comporte un calculateur 86 associé à une mémoire 88.

Toutefois, à la différence du module 16, le module 84 est solidaire du châssis du décodeur de manière à ce que toute tentative de suppression de ce module 84 du décodeur 82 résulte en une destruction du décodeur 82.

A cet effet, par exemple, le module 84 sera intégré à l'intérieur même d'un composant électronique nécessaire au fonctionnement du décodeur 82.

Les mémoires 88 et 22 comportent des instructions pour l'exécution du procédé de la figure 4 lorsqu'elles sont exécutées respectivement par les calculateurs 86 et 20.

Les autres éléments sont identiques à ceux de la figure 1 et portent les mêmes références.

Le fonctionnement de ce second mode de réalisation va maintenant être décrit en regard du procédé de la figure 4.

Le procédé de la figure 4 diffère du procédé de la figure 2 essentiellement par le fait que la sous-étape 42 et l'opération 62 sont respectivement remplacées par une sous-étape 100 et des opérations 102 à 114.

L'émetteur 4, lors de la sous-étape 100, transmet aux décodeurs 82 un ou plusieurs correctifs logiciels.

Pour chaque correctif logiciel transmis ou à transmettre, l'émetteur 4 construit un premier identificateur du correctif logiciel à transmettre lors d'une opération 120 et un second identificateur de ce même correctif logiciel lors d'une opération 122. Ici, lors de l'opération 120, l'émetteur 4 calcule de façon conventionnelle une signature électronique du correctif logiciel à transmettre, puis crypte cette signature électronique à l'aide d'une clé de chiffrement K_{MS}.

De façon similaire à ce qui a été décrit en regard de la sous-étape 42, cette signature permet d'identifier le correctif logiciel transmis et le cryptage permet de sécuriser la transmission du correctif logiciel.

Lors de l'opération 122, l'émetteur construit le second identificateur du correctif logiciel à transmettre en cryptant à l'aide d'une clé de chiffrement K_{CS} la signature électronique calculée lors de l'opération 120 avant que celle-ci ne soit cryptée à l'aide de la clé K_{MS}.

Chaque correctif logiciel accompagné de sa signature électronique calculée lors de l'opération 120 est transmis à l'issue de la sous-étape 100 vers les décodeurs 82.

Ici, l'opération 52 d'insertion d'un identificateur unique dans le message ECM transmis est remplacé par une opération 124 d'insertion dans ce message ECM du second identificateur calculé pour chaque correctif logiciel lors de l'opération 122.

Ainsi, dans ce second mode de réalisation, le message ECM ne comporte pas un unique identificateur mais au contraire autant de seconds identificateurs que de correctifs logiciels transmis.

Lors de la réception des informations transmises par l'émetteur 4 par les décodeurs 82, le module 84 reconstruit, lors de l'opération 102, le premier identificateur pour chaque correctif logiciel reçu. A cet effet, il calcule la signature électronique du correctif logiciel reçu à l'aide du même algorithme que celui utilisé lors de l'opération 120.

Ainsi, si le correctif logiciel reçu est identique à celui transmis par l'émetteur 4, la signature reconstruite est identique à celle cryptée à l'aide de la clé K_{MS} lors de l'opération 120.

Ensuite, le module 84 décrypte, lors de l'opération 104, la signature électronique transmise avec le correctif logiciel reçu lors de la sous-étape 100.

Le module 84 compare alors, lors de l'opération 106, la signature électronique reconstruite lors de l'opération 102 à celle décryptée lors de l'opération 104. Si les signatures reconstruites et décryptées ne correspondent pas, le module 84 interrompt, lors d'une opération 108, le traitement de ce correctif logiciel.

Dans le cas contraire, c'est-à-dire si les signatures électroniques correspondent, le module 84 reconstruit, lors d'une opération 110, le second identificateur de ce correctif logiciel reçu. Typiquement, cette opération 110 est identique à l'opération 122 appliquée à la signature électronique obtenue soit lors de l'opération 102 soit lors de l'opération 104.

Après, le module 84 décrypte le message ECM pour en extraire le second identificateur correspondant au correctif logiciel reçu. Il compare alors, lors de l'opération 112, le second identificateur extrait du message ECM à celui reconstruit lors de l'opération 110. Si ces seconds identificateurs ne sont pas identiques, alors le module 84 procède immédiatement à l'opération 108.

Dans le cas contraire, c'est-à-dire si le second identificateur reconstruit correspond à celui reçu par l'intermédiaire du message ECM, alors le module 84 exécute le correctif logiciel si celui-ci lui est destiné.

Finalement, le module 84 transmet, lors d'une opération 114, le second identificateur reconstruit lors de l'opération 110 vers le module 16.

L'opération 112 permet ici de s'assurer qu'aucun correctif logiciel n'a été supprimé.

Le module 16 procède alors immédiatement à l'opération 66 lors de laquelle il compare le second identificateur transmis par le module 84 à celui contenu dans le message ECM. Le reste des opérations réalisées par le module 16 sont identiques à celles décrites en regard de la figure 2.

Dans le procédé de la figure 4, l'absence d'un correctif logiciel peut être détectée à la fois par le module 84 et par le module 20. Si l'absence du correctif logiciel est détectée par le module 84, celui-ci interrompt immédiatement son traitement et ne transmet donc pas le second identificateur reconstruit au module 16. Lorsque le module 16 ne reçoit pas le second identificateur, il procède automatiquement à l'opération 68 pour inhiber le désembrouillage des chaînes de télévision.

Ainsi, comme dans le premier mode de réalisation, l'absence, l'ajout ou la modification d'un correctif logiciel par rapport à ceux transmis lors de la sous-étape 100 provoque l'arrêt du désembrouillage des chaînes de télévision.

Toutefois, contrairement au premier mode de réalisation, même si le module 16 est un module falsifié prévu pour décrypter le message ECM même si les correctifs logiciels sont modifiés, ajoutés ou absents, il est encore possible d'agir sur ce décodeur 82 pour le rendre inopérant. Par exemple, à cet effet, un correctif logiciel sera transmis au module 84 qui après l'avoir exécuté agira sur le décodeur pour le rendre inopérant. Par exemple, le module 84 agira directement sur le module 18 de désembrouillage. Ainsi, un fabriquant de décodeur pirate devra, dans ce second mode de réalisation, non seulement falsifier le module 16 mais également le module 84. Le module 84 étant solidaire et indétachable du châssis du décodeur 82, ce fabriquant de décodeur pirate devra donc également falsifier l'ensemble du décodeur. Le procédé de la figure 4 rend donc très difficile l'utilisation de parties ou de modules de chiffrement/déchiffrement authentiques dans des décodeurs pirates.

Finalement, il est à noter qu'un fabriquant de décodeurs pirates confronté au procédé de la figure 2 ou 4 et qui souhaite utiliser dans son décodeur pirate un module de chiffrement/déchiffrement authentique doit éliminer ou modifier l'information supplémentaire insérée dans le message ECM lors des étapes 52 ou 124 pour éviter que son décodeur pirate ne soit vulnérable. Pour ce faire, il doit être capable de décrypter le message ECM, c'est-à-dire qu'il doit intégrer de toute façon dans son décodeur pirate un module de chiffrement/déchiffrement falsifié. Dans ces conditions l'utilisation dans un décodeur pirate d'un module de chiffrement/déchiffrement authentique ne présente plus aucun intérêt.

Les systèmes et les procédés décrits ici l'ont été dans le cas particulier d'un système payant de transmission de diffusion de chaînes de télévision. Toutefois, les procédés décrits sont applicables à tout système de transmission d'informations chiffrées dans lesquelles les récepteurs formant décodeurs sont équipés d'un ou plusieurs modules de chiffrement/déchiffrement. Un tel récepteur formant décodeur équipé d'un module de chiffrement/déchiffrement et par exemple, un téléphone mobile équipé d'une carte SIM (Subscriber Identity Module) ou un ordinateur apte à recevoir des logiciels chiffrés.

En particulier, il est à noter que dans ces systèmes autre qu'un système de transmission de diffusion de chaînes de télévision, le signal d'informations n'est pas nécessairement embrouillé mais peut également être crypté.

Le checksum est remplacé dans une variante par une signature électronique.

Le système et le procédé décrits ici l'ont été dans le cas particulier où les différentes opérations de chiffrement/déchiffrement mises en oeuvre sont réalisées à l'aide d'algorithmes de chiffrement asymétrique, de sorte que la clé pour chiffrer est la même que celle pour déchiffrer. Un tel algorithme de chiffrement asymétrique est, par exemple, l'algorithme DES. En variante, certaines ou toutes ces opérations de chiffrement/déchiffrement sont réalisées à l'aide d'algorithmes de chiffrement/déchiffrement asymétrique tels que, par exemple, l'algorithme RSA. Dans cette variante, les mémoires de l'émetteur et des décodeurs doivent être adaptées pour comporter les clés de chiffrement/déchiffrement appropriées. En particulier, et de préférence, les algorithmes de chiffrement mis en oeuvre lors des opérations 120 et 122 sont des algorithmes différents, de sorte que la sécurité du procédé est accrue. Les opérations de déchiffrement correspondant aux opérations 120 et 122 mettent donc également en oeuvre des algorithmes de déchiffrement différents.

## Revendications

1. Procédé pour garantir l'intégrité d'au moins un logiciel informatique exécutable par au moins un module de chiffrement/déchiffrement, ledit au moins logiciel informatique étant transmis par un émetteur vers un décodeur équipé dudit au moins un module de chiffrement/déchiffrement par l'intermédiaire d'un réseau de transmission d'informations grande distance,
l'émetteur réalisant :
a) une étape (40) de chiffrement de signaux d'informations transmis vers le décodeur,
b) une étape (50) de transmission vers ledit au moins un module de chiffrement/déchiffrement du décodeur, d'un message contenant l'information nécessaire pour que le décodeur déchiffre les signaux d'informations transmis à l'étape a), et
c) une étape (42, 100) de transmission dudit au moins un logiciel informatique vers ledit au moins un module de chiffrement/déchiffrement du décodeur,
le décodeur réalisant :
d) une étape (74) de déchiffrement des signaux d'informations transmis par l'émetteur lors de l'étape a) à l'aide de l'information prévue à cet effet dans le message transmis lors de l'étape b),
**caractérisé :**
- **en ce que** l'émetteur insère (en 52, 124) dans le message transmis lors de l'étape b) une information supplémentaire propre à permettre audit au moins un module de chiffrement/déchiffrement de vérifier qu'il a effectivement reçu le ou chaque logiciel informatique transmis à l'étape c),
- **en ce que** ledit au moins un module de chiffrement/déchiffrement vérifie (en 60) à partir de l'information supplémentaire insérée par l'émetteur dans le message transmis lors de l'étape b) s'il a effectivement reçu le ou chaque logiciel transmis lors de l'étape c), et
- **en ce que** si le ou chaque logiciel n'est pas reçu ledit au moins un module de chiffrement/déchiffrement inhibe (en 68) l'étape d).

2. Procédé selon la revendication 1, **caractérisé en ce que** l'émetteur chiffre (en 50) le message transmis à l'étape b), et **en ce que** ledit au moins un module de chiffrement/déchiffrement déchiffre le message transmis lors de l'étape b) pour permettre la réalisation de l'étape d).

3. Procédé selon la revendication 1 ou 2, **caractérisé en ce que** l'émetteur réalise :
e) une étape (44, 122) de construction d'un premier identificateur du ou de chaque logiciel informatique transmis lors de l'étape c), et
f) une étape (52, 124) d'insertion de cet identificateur dans le message transmis lors de l'étape b),
et **en ce que** ledit au moins un module de chiffrement/déchiffrement réalise :
g) une étape (62, 110) de reconstruction de l'identificateur du ou de chaque logiciel informatique à partir du ou de chaque logiciel informatique reçu,
h) une étape (66, 112) de comparaison de l'identificateur reconstruit à l'étape g) avec l'identificateur inséré par l'émetteur lors de l'étape f), et
i) si l'identificateur reconstruit à l'étape g) ne correspond pas à celui inséré à l'étape f) dans le message transmis à l'étape b), une étape (68, 108) d'inhibition de l'étape d),
j) si l'identificateur reconstruit à l'étape g) correspond à l'identificateur inséré à l'étape f) dans le message transmis lors de l'étape b), une étape (66, 112) de validation de l'intégrité du ou de chaque logiciel informatique.

4. Procédé selon la revendication 3, pour garantir l'intégrité d'un ensemble de plusieurs logiciels informatiques exécutables chacun par ledit au moins un module de chiffrement/déchiffrement, **caractérisé en ce que** l'étape e) comporte une opération (44) de construction d'un seul identificateur pour ledit ensemble de plusieurs logiciels informatiques à transmettre lors de l'étape c) à partir d'informations concernant chacun des logiciels dudit ensemble et **en ce que** l'étape g) consiste à réaliser la même opération que celle réalisée lors de l'étape e) pour reconstruire un identificateur unique correspondant à celui construit lors de l'étape e) si ledit ensemble reçu par le décodeur est identique à celui émis par l'émetteur.

5. Procédé selon la revendication 3 ou 4, **caractérisé en ce que** les étapes d), g), h), i) et j) sont réalisées par le même module de chiffrement/déchiffrement.

6. Procédé selon la revendication 3 ou 4, **caractérisé en ce qu'**un premier module de chiffrement/déchiffrement autonome réalise uniquement les étapes d), h), i) et j), et **en ce qu'**un second module de chiffrement/déchiffrement autonome et indépendant du premier module de chiffrement/déchiffrement et solidaire du décodeur, réalise au moins l'étape g).

7. Procédé selon la revendication 6, **caractérisé en ce que** l'émetteur réalise en plus :
k) une seconde étape (120) de construction d'un second identificateur du ou de chaque logiciel informatique transmis lors de l'étape c), ce second identificateur étant transmis conjointement avec le ou chaque logiciel correspondant lors de l'étape c), et
**en ce que** l'étape g) réalisée par le second module de chiffrement/déchiffrement comporte :
- une opération (102) de reconstruction du second identificateur transmis conjointement avec le ou chaque logiciel,
- uniquement si le second identificateur reconstruit correspond à celui transmis conjointement avec le ou chaque logiciel lors de l'étape c), une opération (110) de reconstruction du premier identificateur insérée dans le message transmis lors de l'étape b) et de transmission de ce premier identificateur reconstruit vers le premier module de chiffrement/déchiffrement pour que ce premier module de chiffrement/déchiffrement puisse procéder à l'étape h).

8. Procédé selon la revendication 7, **caractérisé en ce que** le premier et le second identificateurs sont obtenus à partir d'un même identificateur du ou de chaque logiciel informatique en chiffrant le même identificateur à l'aide respectivement d'une première et d'une seconde clés de chiffrement différentes.

9. Procédé selon l'une quelconque des revendications 2 à 8, **caractérisé en ce que** ledit au moins un module de chiffrement/déchiffrement exécute ledit au moins un logiciel informatique à chaque fois que son intégrité est validée lors de l'étape j).

10. Support (12) d'enregistrement d'informations comportant des instructions pour l'exécution d'un procédé selon l'une quelconque des revendications précédentes, lorsque lesdites instructions sont exécutées par l'émetteur (4).

11. Support (22, 88) d'enregistrement d'informations comportant des instructions pour l'exécution d'un procédé selon l'une quelconque des revendications 1 à 9, lorsque lesdites instructions sont à exécuter par ledit au moins un module de chiffrement/déchiffrement.

12. Système pour garantir l'intégrité d'au moins un logiciel informatique exécutable par au moins un module de chiffrement/déchiffrement (16, 84), le système comportant un émetteur (4) pour transmettre ledit au moins un logiciel informatique par l'intermédiaire d'un réseau (8) de transmission d'informations grande distance, et un décodeur (6, 82) équipé dudit au moins un module de chiffrement/déchiffrement (16, 84),
l'émetteur (4) étant apte :
- à chiffrer des signaux d'informations transmis vers le ou chaque décodeur,
- à transmettre vers ledit au moins un module de chiffrement/déchiffrement du décodeur, un message contenant l'information nécessaire pour que le décodeur déchiffre lesdits signaux d'informations transmis, et
- à transmettre ledit au moins un logiciel informatique vers ledit au moins un module de chiffrement/déchiffrement du décodeur,
le décodeur (6, 82) étant apte à déchiffrer lesdits signaux d'informations transmis par l'émetteur à l'aide de l'information prévue à cet effet contenue dans ledit message transmis par l'émetteur,
**caractérisé :**
- **en ce que** l'émetteur (4) est apte à insérer dans ledit message une information supplémentaire propre à permettre audit au moins module de chiffrement/déchiffrement (46, 84) de vérifier qu'il a reçu le ou chaque logiciel informatique transmis,
- **en ce que** ledit au moins un module de chiffrement/déchiffrement (16, 84) est apte à vérifier à partir de l'information supplémentaire insérée par l'émetteur dans ledit message, s'il a effectivement reçu le ou chaque logiciel transmis par l'émetteur, et
- **en ce que** si le ou chaque logiciel n'est pas reçu ledit au moins un module de chiffrement/déchiffrement (16, 84) est apte à inhiber le déchiffrement desdits signaux d'informations transmis.

13. Système selon la revendication 12, **caractérisé en ce que** le ou chaque décodeur (6) est équipé d'un unique module de chiffrement/déchiffrement amovible.

14. Système selon la revendication 12, **caractérisé en ce que** le ou chaque décodeur (82) est équipé d'au moins deux modules de chiffrement/déchiffrement autonomes et indépendants l'un de l'autre, au moins l'un de ces modules de chiffrement/déchiffrement étant solidaire du châssis du décodeur.

15. Emetteur (4) adapté pour la mise en oeuvre d'un procédé conforme à l'une quelconque des revendications 1 à 9, cet émetteur (4) étant apte à :
- à chiffrer des signaux d'informations transmis vers le ou chaque décodeur,
- à transmettre vers ledit au moins un module de chiffrement/déchiffrement du décodeur, un message contenant l'information nécessaire pour que le décodeur déchiffre lesdits signaux d'informations transmis, et
- à transmettre ledit au moins un logiciel informatique vers ledit au moins un module de chiffrement/déchiffrement du décodeur,
**caractérisé :**
- **en ce que** l'émetteur (4) est apte à insérer dans ledit message une information supplémentaire propre à permettre audit au moins module de chiffrement/déchiffrement (46, 84) de vérifier qu'il a reçu le ou chaque logiciel informatique transmis,

16. Décodeur (6, 82) adapté pour la mise en oeuvre d'un procédé conforme à l'une quelconque des revendications 1 à 9, ce décodeur (6, 82) étant apte à déchiffrer lesdits signaux d'informations transmis par l'émetteur à l'aide de l'information prévue à cet effet contenue dans ledit message transmis par l'émetteur, et étant équipé dudit au moins un module de chiffrement/déchiffrement (16, 84) ;
**caractérisé :**
- **en ce que** ledit au moins un module de chiffrement/déchiffrement (16, 84) est apte à vérifier à partir de l'information supplémentaire insérée par l'émetteur dans ledit message, s'il a effectivement reçu le ou chaque logiciel transmis par l'émetteur, et
- **en ce que** si le ou chaque logiciel n'est pas reçu ledit au moins un module de chiffrement/déchiffrement (16, 84) est apte à inhiber le déchiffrement desdits signaux d'informations transmis.

17. Décodeur (6, 82) selon la revendication 16, **caractérisé en ce qu'**il est équipé d'un unique module de chiffrement/déchiffrement amovible.

18. Décodeur (6, 82) selon la revendication 16, **caractérisé en ce qu'**il est équipé d'au moins deux modules de chiffrement/déchiffrement autonomes et indépendants l'un de l'autre, au moins l'un de ces modules de chiffrement/déchiffrement étant solidaire du châssis du décodeur.

## Claims

1. Method for ensuring the integrity of at least one computer software program which can be carried out by means of at least one encryption/decryption module, the at least one computer software program being transmitted, by means of a transmitter, to a decoder which is equipped with the at least one encryption/decryption module by means of a long-distance information transmission network,
the transmitter carrying out:
a) a step (40) for encrypting information signals transmitted to the decoder,
b) a step (50) for transmitting, to the at least one encryption/decryption module of the decoder, a message containing the information required for the decoder to decrypt the information signals transmitted at step a), and
c) a step (42, 100) for transmitting the at least one computer software program to the at least one encryption/decryption module of the decoder,
the decoder carrying out:
d) a step (74) for decrypting the information signals transmitted by the transmitter during step a) using the information provided for this purpose in the message transmitted during step b),
**characterised:**
- **in that** the transmitter inserts (at 52, 124) in the message transmitted during step b) an additional item of information which allows the at least one encryption/decryption module to verify that it has effectively received the or each computer software program transmitted at step c),
- **in that** the at least one encryption/decryption module verifies (at 60), based on the additional information inserted by the transmitter in the message transmitted during step b), whether it has effectively received the or each software program transmitted during step c), and
- **in that**, if the or each software program has not been received, the at least one encryption/decryption module prevents step d) (at 68).

2. Method according to claim 1, **characterised in that** the transmitter encrypts (at 50) the message transmitted at step b), and **in that** the at least one encryption/decryption module decrypts the message transmitted during step b) in order to allow step d) to be carried out.

3. Method according to claim 1 or 2, **characterised in that** the transmitter carries out:
e) a step (44, 122) for constructing a first identifier of the or each computer software program transmitted during step c), and
f) a step (52, 124) for inserting this identifier in the message transmitted during step b),
and **in that** the at least one encryption/decryption module carries out:
g) a step (62, 110) for reconstructing the identifier of the or each computer software program based on the or each computer software program received,
h) a step (66, 112) for comparing the identifier reconstructed at step g) with the identifier inserted by the transmitter during step f), and
i) if the identifier reconstructed at step g) does not correspond to that inserted at step f) in the message transmitted at step b), a step (68, 108) for preventing step d),
j) if the identifier reconstructed at step g) corresponds to the identifier inserted at step f) in the message transmitted during step b), a step (66, 112) for validating the integrity of the or each computer software program.

4. Method according to claim 3, for ensuring the integrity of a group of several computer software programs which can each be carried out by the at least one encryption/decryption module, **characterised in that** step e) comprises an operation (44) for constructing a single identifier for the group of several computer software programs to be transmitted during step c) based on information relating to each of the software programs of the group and **in that** step g) consists in carrying out the same operation as that carried out during step e) in order to reconstruct a unique identifier corresponding to that constructed during step e) if the group received by the decoder is identical to that transmitted by the transmitter.

5. Method according to claim 3 or 4, **characterised in that** the steps d), g), h), i) and j) are carried out by the same encryption/decryption module.

6. Method according to claim 3 or 4, **characterised in that** a first autonomous encryption/decryption module carries out only steps d), h), i) and j), and **in that** a second autonomous encryption/decryption module which is independent from the first encryption/decryption module and which is fixedly joined to the decoder carries out at least step g).

7. Method according to claim 6, **characterised in that** the transmitter further carries out:
k) a second step (120) for constructing a second identifier of the or each computer software program transmitted during step c), this second identifier being transmitted together with the or each corresponding software program during step c), and
- **in that** step g) which is carried out by the second encryption/decryption module comprises:
- an operation (102) for reconstructing the second identifier which is transmitted together with the or each software program,
- only if the second reconstructed identifier corresponds to that transmitted together with the or each software program during step c), an operation (110) for reconstructing the first identifier inserted in the message transmitted during step b) and for transmitting this first reconstructed identifier to the first encryption/decryption module so that the first encryption/decryption module can carry out step h).

8. Method according to claim 7, **characterised in that** the first and the second identifiers are obtained from the same identifier of the or each computer software program by encrypting the same identifier using a different first and second encryption key, respectively.

9. Method according to any one of claims 2 to 8, **characterised in that** the at least one encryption/decryption module carries out the at least one computer software program each time the integrity thereof is validated during step j).

10. Information recording medium (12) comprising instructions for carrying out a method according to any one of the preceding claims, when the instructions are carried out by the transmitter (4).

11. Information recording medium (22, 88) comprising instructions for carrying out a method according to any one of claims 1 to 9, when the instructions are to be carried out by the at least one encryption/decryption module.

12. System for ensuring the integrity of at least one computer software program which can be carried out by at least one encryption/decryption module (16, 84), the system comprising a transmitter (4) for transmitting the at least one computer software program via a long-distance information transmission network (8), and a decoder (6, 82) which is equipped with the at least one encryption/decryption module (16, 84),
the transmitter (4) being capable of:
- encrypting information signals transmitted to the or each decoder,
- transmitting to the at least one encryption/decryption module of the decoder a message containing the information required for the decoder to decrypt the information signals transmitted, and
- transmitting the at least one computer software program to the at least one encryption/decryption module of the decoder,
- the decoder (6, 82) being capable of decrypting the information signals transmitted by the transmitter using the information which is provided for this purpose and which is contained in the message transmitted by the transmitter,
**characterised:**
- **in that** the transmitter (4) is capable of inserting in the message an additional item of information which allows the at least one encryption/decryption module (46, 84) to verify that it has received the or each computer software program transmitted,
- **in that** the at least one encryption/decryption module (16, 84) is capable of verifying, based on the additional information inserted by the transmitter in the message, whether it has effectively received the or each software program transmitted by the transmitter, and
- **in that**, if the or each software program has not been received, the at least one encryption/decryption module (16, 84) is capable of preventing the decryption of the information signals transmitted.

13. System according to claim 12, **characterised in that** the or each decoder (6) is equipped with a single removable encryption/decryption module.

14. System according to claim 12, **characterised in that** the or each decoder (82) is equipped with at least two autonomous encryption/decryption modules which are independent from each other, at least one of these encryption/decryption modules being fixedly joined to the body of the decoder.

15. Transmitter (4) which is suitable for carrying out a method according to any one of claims 1 to 9, this transmitter (4) being capable of:
- encrypting information signals transmitted to the or each decoder,
- transmitting to the at least one encryption/decryption module of the decoder a message containing the information required for the decoder to decrypt the information signals transmitted, and
- transmitting the at least one computer software program to the at least one encryption/decryption module of the decoder,
**characterised:**
- **in that** the transmitter (4) is capable of inserting in the message an additional item of information which allows the at least one encryption/decryption module (46, 84) to verify that it has received the or each computer software program transmitted.

16. Decoder (6, 82) which is suitable for carrying out a method according to any one of claims 1 to 9, this decoder (6, 82) being capable of decrypting the information signals transmitted by the transmitter using the information which is provided for this purpose and which is contained in the message transmitted by the transmitter, and being equipped with the at least one encryption/decryption module (16, 84);
**characterised:**
- **in that** the at least one encryption/decryption module (16, 84) is capable of verifying, based on the additional information inserted by the transmitter in the message, whether it has effectively received the or each software program transmitted by the transmitter, and
- **in that**, if the or each software program has not been received, the at least one encryption/decryption module (16, 84) is capable of preventing the decryption of the information signals transmitted.

17. Decoder (6, 82) according to claim 16, **characterised in that** it is equipped with a single removable encryption/decryption module.

18. Decoder (6, 82) according to claim 16, **characterised in that** it is equipped with at least two autonomous encryption/decryption modules which are independent from each other, at least one of these encryption/decryption modules being fixedly joined to the body of the decoder.

## Patentansprüche

1. Verfahren zur Sicherstellung der Integrität mindestens eines Datenverarbeitungsprogrammes zur Ausführung durch ein Verschlüsselungs-/Entschlüsselungsmodul, wobei das genannte mindestens eine Datenverarbeitungsprogramm von einem Sender an einen Decoder, der mit dem genannten mindestens einen Verschlüsselungs-/Entschlüsselungsmodul ausgestattet ist, über ein Informationsfernübertragungsnetz übertragen wird,
wobei der Sender ausführt;
a) einen Schritt (40) zur Verschlüsselung von Informationssignalen, die zum Decoder übertragen werden,
b) einen Schritt (50) zur Übertragung einer Meldung an das genannte mindestens eine Verschlüsselungs-/Entschlüsselungsmodul des Decoders, die die dafür erforderliche Information enthält, dass der Decoder die Informationssignale entschlüsseln kann, die im Schritt a) übertragen wurden, und
c) einen Schritt (42, 100) zur Übertragung des genannten mindestens einen Datenverarbeitungsprogramms an das genannte mindestens eine Verschlüsselungs-/Entschlüsselungsmodul des Decoders,
während der Decoder ausführt:
d) einen Schritt (74) zur Entschlüsselung von Informationssignalen, die vom Sender im Schritt a) übertragen wurden, mit Hilfe der Information, die zu diesem Zweck in der im Schritt b) übertragenen Meldung vorgesehen wurde,
**gekennzeichnet**
- **dadurch, dass** der Sender in die im Schritt b) übertragene Meldung eine zusätzliche Information einfügt (in 52, 124), die geeignet ist, dem genannten mindestens einen Verschlüsselungs-/Entschlüsselungsmodul zu prüfen zu erlauben, dass es tatsächlich das oder jedes im Schritt c) übertragene Datenverarbeitungsprogramm empfangen hat,
- **dadurch**, dass das genannte mindestens eine Verschlüsselungs-/Eritschlüsselungsmodul aufgrund der zusätzlichen Information, die vom Sender in die im Schritt b) übertragene Meldung eingefügt wurde, prüft (in 60), ob es tatsächlich das oder jedes im Schritt c) übertragene Datenverarbeitungsprogramm empfangen hat, und
- **dadurch**, dass das genannte mindestens eine Verschlüsselungs-/Entschlüsselungsmodul in dem Fall, dass das Programm nicht empfangen wurde oder nicht jedes Programm empfangen wurde, den Schritt d) sperrt (in 68),

2. Verfahren nach Patentanspruch 1, **dadurch gekennzeichnet, dass** der Sender die im Schritt b) übertragene Meldung verschlüsselt (in 50) und **dadurch**, dass das genannte mindestens eine Verschlüsselungs-/Entschlüsselungsmodul die im Schritt b) übertragene Meldung entschlüsselt, um die Ausführung des Schrittes d) zuzulassen.

3. Verfahren nach Patentanspruch 1 oder 2, **dadurch gekennzeichnet, dass** der Sender ausführt:
e) einen Schritt (44, 122) zur Erstellung einer ersten Kennung des oder jedes Datenverarbeitungsprogramms, das im Schritt c) übertragen wird, und
f) einen Schritt (52, 124) zum Einfügen dieser Kennung in die Meldung, die im Schritt b) übertragen wird,
und **dadurch**, dass das genannte mindestens eine Verschlüssefungs-/Entschlüsselungsmodul ausführt:
g) einen Schritt (62, 110) zur Rekonstruktion der Kennung des oder jedes Datenverarbeitungsprogramms aufgrund des oder jedes empfangenen Datenverarbeitungsprcgramms,
h) einen Schritt (66, 112) zum Vergleich der im Schrift g) rekonstruierten Kennung mit der Kennung, die vom Sender im Schritt f) eingefügt wurde, und
i) wenn die im Schritt g) rekonstruierte Kennung nicht der im Schritt f) in die im Schritt b) übertragene Meldung eingefügten entspricht, einen Schritt (68, 108) zur Sperrung des Schrittes d),
j) wenn die im Schritt g) rekonstruierte Kennung der im Schritt f) in die im Schritt b) übertragene Meldung eingefügten Kennung entspricht, einen Schritt (66, 112) zur Validierung der Integrität des oder jedes Datenverarbeitungsprogrammes.

4. Verfahren nach Patentanspruch 3 zur Sicherstellung der Integrität einer Gesamtheit mehrerer Datenverarbeitungsprogramme jeweils zur Ausführung durch das genannte mindestens eine Verschlüsselubngs-/Entschlüsselungsmodul, **dadurch gekennzeichnet, dass** der Schritt e) mindestens einen Vorgang (44) zur Erstellung einer einzigen Kennung für die genannte Gesamtheit mehrerer im Schritt c) zu übertragender Datenverarbeitungsprogramme aufgrund von Informationen über jedes der Programme der genannten Gesamtheit und **dadurch**, dass der Schritt g) darin besteht, denselben Vorgang auszuführen, wie er im Schritt e) ausgeführt wurde, um eine einzige Kennung zu rekonstruieren, die der entspricht, die im Schritt e) erstellt wurde, wenn die genannte, vom Decoder empfangene Gesamtheit mit derjenigen identisch ist, die der Sender gesendet hat.

5. Verfahren nach Patentanspruch 3 oder 4, **dadurch gekennzeichnet, dass** die Schritte d), g), h), i) und j) von demselben Verschlüsselungs-/Entschlüsselungsmodul ausgeführt werden.

6. Verfahren nach Patentanspruch 3 oder 4, **dadurch gekennzeichnet, dass** ein selbständiges erstes verschlüsselungs-/Entschlüsselungsmodul ausschließlich die Schritte d), h), i) und j) ausführt und **dadurch**, dass ein zweites selbständiges und vom ersten Verschlüsselungs-/Entschlüsselungsmodul unabhängiges Verschlüsselungs-/Entschlüsselungsmodul, das mit dem Decoder fest verbunden ist, mindestens den Schritt g) ausführt.

7. Verfahren nach Patentanspruch 6. **dadurch gekennzeichnet, dass** der Sender außerdem ausführt:
k) einen zweiten Schritt (120) zur Erstellung einer zweiten Kennung des oder jedes Datenverarbeitungsprogrammes, das im Schritt c) übertragen wird, wobei diese zweite Kennung im Schritt c) zusammen mit dem oder jedem entsprechenden Datenverarbeitungsprogramm Übertragen wird, und
**dadurch**, dass der vom zweiten Verschlüsselungs-/Entschlüsselungsmodul ausgeführte Schritt g) umfasst:
- einen Vorgang (102) zur Rekonstruktion der zweiten zusammen mit dem oder jedem Programm übertragenen Kennung,
- nur wenn die zweite rekonstruierte Kennung der im Schritt c) zusammen mit dem oder jedem Programm übertragenen entspricht, einen Vorgang (110) zur Rekonstruktion der ersten, in die im Schritt b) übertragene Meldung eingefügten Kennung und zur Übertragung dieser ersten rekonstruierten Kennung an das erste Verschlüsselungs-/Entschlüsselungsmodul, damit dieses erste Verschlüsselungs-/Entschlüssetungsmodul zum Schritt h) übergehen kann.

8. Verfahren nach Patentanspruch 7, **dadurch gekennzeichnet, dass** die erste und die zweite Kennung aus derselben Kennung des oder jedes Datenverarbeitungsprogramms gewonnen werden, indem dieselbe Kennung mit Hilfe eines ersten bzw. eines zweiten unterschiedlichen Verschlüsselungsschlüssels verschlüsselt wird.

9. Verfahren nach irgendeinem der Patentansprüche 2 bis 8, **dadurch gekennzeichnet, dass** das genannte mindestens eine Verschlüsselungs-/Entschlüsselungsmodul das genannte mindestens eine Datenverarbeitungsprogramm jedesmal ausführt, wenn seine Integrität im Schritt j) validiert wurde.

10. Informationsspeichermedium (12), Anweisungen zur Ausführung eines Verfahrens nach irgendeinem der vorangehenden Patentansprüche tragend, wenn die genannten Anweisungen durch den Sender (4) ausgeführt werden.

11. Informationsspeichermedium (22, 88). Anweisungen zur Ausführung eines Verfahrens nach irgendeinem der Patentansprüche 1 bis 9 tragend, wenn die genannten Anweisungen durch das genannte mindestens eine Verschlüsselungs-/Entschlüsselungsmodul auszuführen sind.

12. System zur Sicherstellung der Integrität mindestens eines Datenverarbeitungsprogrammes zur Ausführung durch mindestens ein Verschlüsselungs-/Entschlosselungsmodul (16, 84),
wobei das System einen Sender (4) zur Übertragung des genannten mindestens einen Datenverarbeitungsprogrammes mit Hilfe eines informationsfernübertragungsnetzes (8) umfasst und einen Decoder (6, 82), der mit dem genannten mindestens einen Verschlüsselungs-/Entschlüsselungsmoclul (16, 84) versehen ist,
wobei der Sender (4) in der Lage ist:
- informationssignale zu verschlüsseln, die an den oder jeden Decoder übertragen werden,
- an das genannte mindestens eine Verschlüsselungs-/Entschlüsselungsmodul des Decoders eine Meldung zu übertragen, die die erforderliche Information enthält, damit der Decoder die genannten übertragenen Informationssignale entschlüsselt, und
- das genannte mindestens eine Datenverarbeitungsprogramm an das genannte mindestens eine Verschlüsselungs-/Entschlüsselungsmodul des Decoders zu übertragen,
wobei der Decoder (6, 82) in der Lage ist, die genannten vom Sender übertragenen Informationssignale mit Hilfe der hierfür vorgesehenen Information zu entschlüsseln, die in der genannten vom Sender übertragenen Meldung enthalten ist,
**gekennzeichnet:**
**dadurch, dass** der Sender (4) in der Lage ist, in die genannte Meldung eine zusätzliche Information einzufügen, die geeignet ist, dem genannten mindestens einen Verschlüsselungs-/Entschlüsselungsmodul (16, 84) zu prüfen zu erlauben, dass es das oder jedes übertragene Datenverarbeitungsprogramm empfangen hat,
**dadurch**, dass das genannte mindestens eine Verschlüsselungs-/Entschlüsselungsmodul (16, 84) in der Lage ist, aufgrund der vom Sender in die genannte Meldung eingefügten zusätzlichen Information zu prüfen, ob es tatsächlich das oder jedes übertragene Datenverarbeitungsprogramm empfangen hat, und
- **dadurch**, dass das genannte mindestens eine Verschlüsselungs-/Entschlüsselungsmodul (16, 84), wenn das Programm nicht empfangen oder nicht jedes Programm empfangen wurde, in der Lage ist, die Entschlüsselung der genannten übertragenen Informationssignale zu sperren.

13. System nach Patentanspruch 12, **dadurch gekennzeichnet, dass** der oder jeder Decoder (6) mit einem einzigen, entnehmbaren Verschlüsselungs-/Entschlüsselungsmodul ausgestattet ist.

14. System nach Patentanspruch 12, **dadurch gekennzeichnet, dass** der oder jeder Decoder (82) mit mindestens zwei Verschlüsselungs-/Entschlüsselungsmodulen ausgestattet ist, die selbständig und voneinander unabhängig sind, wobei mindestens eins dieser Verschlüsselungs-/Entschlüsselungsmodule mit dem Chassis des Decoders fest verbunden ist.

15. Sender (4), eingerichtet für die Ausführung eines Verfahrens nach irgendeinem der Patentansprüche 1 bis 9, wobei dieser Sender (4) in der Lage ist:
- Informationssignale zu verschlüsseln, die an den oder jeden Decoder übertragen werden,
- an das genannte mindestens eine Verschlüsselungs-/Entschlüsselungsmodul des Decoders eine Meldung zu übertragen, die die dafür erforderliche Information enthält, dass der Decoder die genannten übertragenen Informationssignale entschlüsseln kann, und
- das genannte mindestens eine Datenverarbeitungsprogramm an das genannte mindestens eine Verschlüsselungs-/Entschlüsselungsmodul des Decoders zu übertragen,
**gekennzeichnet**
- **dadurch, dass** der Sender (4) in der Lage ist, in die genannte Meldung eine zusätzliche Information einzufügen, die geeignet ist, dem genannten mindestens einen Verschlüsselungs-/Entschlüsselungsmodul (16,84) zu prüfen zu erlauben, dass es das oder jedes übertragene Datenverarbeitungsprogramm empfangen hat.

16. Decoder (6, 82), eingerichtet für die Ausführung eines Verfahrens nach irgendeinem der Patentansprüche 1 bis 9, wobei dieser Decoder (6, 82) in der Lage ist, die vom Sender übertragenen Informationssignale mit Hilfe der zu diesem Zweck vorgesehenen, in der genannten, vom Sender übermittelten Meldung enthaltenen Information zu entschlüsseln, und mit dem genannten mindestens einen Verschlüsselungs-/Entschlüssetungsmodul (16,84) ausgestattet ist,
**gekennzeichnet**
- **dadurch, dass** das genannte mindestens eine Verschlüsselungs-/Entschlüsselungsmodul (16,84) aufgrund der vom Sender in die genannte Meldung eingefügten zusätzlichen Information zu prüfen in der Lage ist, ob es tatsächlich das oder jedes vom Sender übertragene Programm empfangen hat, und
- **dadurch**, dass in dem Fall, dass das Programm nicht oder nicht jedes Programm empfangen wurde, das genannte mindestens eine Verschlüsselungs-/Entschlüsselungsmodul (16,84) in der Lage ist, die Entschlüsselung der genannten übertragenen Informationssignale zu sperren.

17. Decoder (6, 82) nach Patentanspruch 16, **dadurch gekennzeichnet, dass** er mit einem einzigen entnehmbaren Verschlüsselungs-/Entsuhlüsselungsmodul ausgestattet ist.

18. Decoder (6, 82) nach Patentanspruch 16, **dadurch gekennzeichnet, dass** er mit mit mindestens zwei Verschlüssetungs-/Entschlüsselungsmodulen ausgestattet ist, die selbständig und voneinander unabhängig sind, wobei mindestens eins dieser Verschlüsselungs-/Entschlüsselungsmodule mit dem Chassis des Decoders fest verbunden ist.
